# EUROPÄISCHE PATENTSCHRIFT

(11) **EP 3 904 704 B1**
(45) Veröffentlichungstag und Bekanntmachung des Hinweises auf die Patenterteilung: **12.03.2025**
(21) Anmeldenummer: 21181844.8
(22) Anmeldetag: 08.07.2019
(51) Int. Cl.: F16B 13/12

(54) **VERBUNDABDICHTUNGS-DÜBEL**
COMPOUND SEAL BLANK
CHEVILLE COMPOSITE D'ÉTANCHÉITÉ

(30) Priorität: 03.08.2018 DE 202018003632 U
(43) Veröffentlichungstag der Anmeldung: 03.11.2021
(62) Teilanmeldung aus: 19185074.2
(73) Patentinhaber: Sopro Bauchemie GmbH, 65203 Wiesbaden (DE)
(72) Erfinder: Sommer, Mario, 65594 Runkel (DE)
(74) Vertreter: Diehl & Partner

(56) Entgegenhaltungen:
- DE-A1- 19 845 696

## Beschreibung

Die Erfindung betrifft einen Verbundabdichtungs-Dübel. Dabei wird unter einem Verbundabdichtungs-Dübel ein Schraubdübel verstanden, der zwischen einer Schraube und einem Baukörper, in dem der Schraubdübel angeordnet ist, insbesondere im Hinblick auf Feuchtigkeit und Flüssigkeiten eine Dichtwirkung entfaltet. Dabei durchdringt der Schraubdübel eine in dem Baukörper vorgesehene Verbundabdichtung und dichtet gegenüber dieser Verbundabdichtung zuverlässig und dauerhaft ab.

Ein Dübel mit Dichtwirkung ist aus der deutschen Offenlegungsschrift DE 198 45 696 A1 bekannt. Der vorbekannte Dübel weist am Dübelkopf oder in der Nähe des Dübelkopfes mindestens ein Abdichtmittel auf. Dieses Abdichtmittel besitzt sowohl einen Innenteil, das gegen ein in den Dübel eingeführtes Befestigungsmittel abdichtet, als auch ein Außenteil, das gegen eine Oberfläche in der Nähe des äußeren Randes einer den Dübel aufnehmenden Bohrung abdichtet. Das Abdichtmittel kann aus einem verformbaren Material, wie zum Beispiel Gummi bestehen. Alternativ kann es sich bei dem Abdichtmittel um ein Dichtkissen mit Silikon- Dichtgel- oder Dichtkittinhalt handeln, welches von einer feinen Haut oder Membran umschlossen ist

Gemäß der Normen DIN 19 531, DIN 19 532, DIN 19 533 und DIN 19 534 sind Bauwerke und Bauteile so zu planen und auszuführen, dass keine Schäden durch Wasser oder Feuchtigkeit entstehen. In der Folge ist die Bausubstanz durch geeignete Abdichtungsmaßnahmen zu schützen.

Hierfür werden häufig Verbundabdichtungssysteme mit einer Schutzschicht aus keramischen Belags- und Bekleidungsbaustoffen bzw. Natur- oder Betonwerksteinfliesen verwendet. Diese setzen sich in der Regel aus einer keramischen Fliese oder Platte, Fugenmörtel zwischen den Fliesen oder Platten, unter der Fliese oder Platte befindlichem Fliesenkleber und einer Abdichtung zusammen. Die Abdichtung ist in der Regel zwischen dem Fliesenkleber und einem Baukörper (einer Wand oder einem Boden, beispielsweise aus Ziegel oder Beton) angeordnet und mit dem Baukörper verklebt. Für die Abdichtung werden im Lieferzustand pulverförmige, pastöse, flüssige oder bahnenförmige Abdichtungsstoffe verwendet. Geeignete flüssige Abdichtungsstoffe können in unterschiedlichen Ausgestaltungen, beispielsweise unter den Bezeichnungen FlächenDicht flexibel (FDF), DichtSchlämme Flex (DSF), TurboDichtSchlämme (TDS) oder PU-FlächenDicht (PU-FD), von der Sopro Bauchemie GmbH, Wiesbaden, Deutschland bezogen werden. Geeignete bahnenförmige Abdichtungsstoffe können in unterschiedlichen Ausgestaltungen, beispielsweise unter der Bezeichnung Abdichtungs- und EntkopplungsBahn AEB (geschütztes Warenzeichen) oder Abdichtungs- und Entkopplungsbahn plus (geschütztes Warenzeichen), von der Sopro Bauchemie GmbH, Wiesbaden, Deutschland bezogen werden. Derartige bahnenförmige Abdichtungsstoffe bestehen beispielsweise aus reißfester Polypropylenfolie mit einer beidseitigen speziellen Vliesgewebebeschichtung aus Polypropylen und einer Dicke von ca. 0,3 mm bis 0,9 mm.

Eine besondere Problematik stellen bei Verbundabdichtungssystemen nachträglich eingebrachte Durchdringungen wie insbesondere Bohrlöcher dar, da diese die Verbundabdichtung typischerweise bis hin zum Baukörper durchdringen. Auch bei derartigen nachträglich eingebrachten Durchdringungen muss die Dichtigkeit des Verbundabdichtungssystems gewährleistet werden.

Es besteht daher ein Bedarf daran, Mittel bereitzustellen, welche eine Abdichtung von nachträglich in Verbundabdichtungssystemen eingebrachten Durchdringungen auf einfache und zuverlässige Weise ermöglichen. Gemäß einer Ausführungsform sollten die Mittel auch nach Durchdringung des Verbundabdichtungssystems eine für eine jeweilige Beanspruchungsklasse gegen Wasser oder Feuchtigkeit geforderte Dichtigkeit sicher erfüllen.

Die vorstehende Aufgabe wird durch einen Verbundabdichtungs-Dübel mit den Merkmalen der unabhängigen Ansprüche gelöst. Bevorzugte Weiterbildungen finden sich in den abhängigen Ansprüchen.

Gemäß aller Ausführungsformen wird ein Verbundabdichtungs-Dübel (Schraubdübel) mit einem hohlzylindrischen Grundkörper bereitgestellt. Dabei muss der hohlzylindrische Grundkörper kein im mathematischen Sinn perfekter Hohlzylinder sein. Zudem kann der Hohlzylinder einseitig geschlossen und am geschlossenen Ende verrundet sein. Auch ist es zulässig, dass eine Mantelfläche des Hohlzylinders Durchdringungen, Vertiefungen oder Vorsprünge aufweist. Dabei weist der Grundkörper in axialer Richtung an einem ersten Ende eine Öffnung zur Aufnahme einer Schraube auf. Beim Eindrehen der Schraube spreizt sich der Verbundabdichtungs-Dübel. Durch Kraftschluss zwischen Verbundabdichtungs-Dübel und umgebenden Material ist die Schraube gegen Herausziehen gesichert. Weiter formt die Schraube im inneren Teil des Verbundabdichtungs-Dübels ein Gegengewinde, wobei sie das Material, aus dem der Verbundabdichtungs-Dübel gebildet ist, plastisch verformt und zusätzlich radial nach außen verdrängt und so den Verbundabdichtungs-Dübel spreizt.

Gemäß einer ersten Ausführungsform weist der Grundkörper in axialer Richtung einen ersten Abschnitt und einen zweiten Abschnitt auf, wobei der erste Abschnitt zwischen dem zweiten Abschnitt und dem ersten Ende des Grundkörpers angeordnet ist. An seiner radial außenliegenden Mantelfläche und optional an seiner radial innenliegenden Mantelfläche weist der Grundkörper im ersten Abschnitt einen Dichtstoff auf, der aus einem elastischen Material gebildet ist. Im zweiten Abschnitt ist der Grundkörper an seiner radial außenliegenden Mantelfläche hingegen frei von dem (elastischen) Dichtstoff. Dabei ist der (elastische) Dichtstoff aus einem Material gebildet, welches sich von dem Material, aus welchem der Grundkörper gebildet ist, unterscheidet. Somit werden die ersten und zweiten Abschnitte durch das Vorhandensein bzw. die Abwesenheit von (elastischem) Dichtstoff festgelegt. Erfindungsgemäß umgibt der Dichtstoff den Grundkörper im ersten Abschnitt an seiner radial außenliegenden Mantelfläche in Umfangsrichtung des Grundkörpers vollständig, und bildet so jeweils einen Ring. Beim Einschrauben einer Schraube in den Verbundabdichtungs-Dübel wird der (elastische) Dichtstoff radial nach außen gedrückt. Freie Räume in einer Durchdringung, in welche der Verbundabdichtungs-Dübel eingesetzt ist, werden vom (elastischen) Dichtstoff ausgefüllt, wodurch die Durchdringung gegenüber dem Verbundabdichtungs-Dübel und der Schraube abgedichtet wird. Weiter entsteht so auch ein Formschluss gegen Herausziehen des Verbundabdichtungs-Dübels. Erfindungsgemäß weist der Grundkörper im ersten Abschnitt an seiner radial innenliegenden Mantelfläche einen sich in radialer und axialer Richtung erstreckenden Vorsprung auf. Indem der Grundkörper im Bereich des (elastischen) Dichtstoffes einen sich radial nach innen erstreckenden Vorsprung aufweist, wird sichergestellt, dass im Bereich des (elastischen) Dichtstoffes beim Eindrehen einer Schraube besonders viel Material radial nach außen verdrängt wird.

Durchsetzt die Durchdringung dabei eine Verbundabdichtung, die wie vorstehend beschrieben aus einer Schutzschicht aus einer keramischen Fliese oder Platte bzw. einem Natur- oder Betonwerkstein, Fugenmörtel zwischen den Fliesen oder Platten, unter der Fliese oder Platte befindlichem Fliesenkleber und einer Abdichtung gebildet ist, bewirkt der im ersten Abschnitt vorhandene (elastische) Dichtstoff erfindungsgemäß eine Dichtwirkung, welche in axialer Richtung des Verbundabdichtungs-Dübels die Abdichtung der Verbundabdichtung und Abschnitte zu beiden Seiten der Abdichtung umfasst und somit schichtübergreifend wirkt.

Gemäß einer Ausführungsform weist das den Grundkörper bildende Material im ersten Abschnitt an der radial außenliegenden Mantelfläche des Grundkörpers einen sich in axialer und radialer Richtung erstreckenden Rücksprung auf, in welchen der (elastische) Dichtstoff ganz oder teilweise eingesetzt ist. Da ein Rücksprung gegenüber der benachbarten radial außenliegenden Mantelfläche des Grundkörpers radial nach innen zurückversetzt ist, ist es durch ganzes oder teilweises Einsetzen des (elastischen) Dichtstoffes möglich, die Lage des (elastischen) Dichtstoffes in axialer Richtung des Grundkörpers zu fixieren. Weiter ist es hierdurch möglich, sicherzustellen dass eine radial außenliegende Mantelfläche des (elastischen) Dichtstoffes mit der radial außenliegenden Mantelfläche des Grundkörpers fluchtet (was bedeutet, dass beide Flächen bündig sind) oder gegenüber dieser nur geringfügig vorspringt. Dabei soll unter "*geringfügig*" verstanden werden, dass die radial außenliegende Mantelfläche des (elastischen) Dichtstoffes gegenüber der radial außenliegenden Mantelfläche des Grundkörpers um weniger als die mittlere Wandstärke des Grundkörpers vorspringt und insbesondere um weniger als die Hälfte der mittleren Wandstärke des Grundkörpers vorspringt. Gemäß einer Ausführungsform springt die radial außenliegende Mantelfläche des (elastischen) Dichtstoffes gegenüber der radial außenliegenden Mantelfläche des Grundkörpers um weniger als 1 mm und insbesondere um weniger als 0,5 mm vor. Der Begriff "*eingesetzt*" soll dabei sowohl ein nachträgliches Einsetzten eines separaten (elastischen) Dichtstoffes in Form eines Ringes als auch ein Umspritzen des Grundkörpers mit dem (elastischen) Dichtstoff umfassen.

Gemäß einer Ausführungsform ist die mittlere Dicke der Außenwand des Grundkörpers der radiale Abstand zwischen einem von einer radial außenliegenden Mantelfläche des Grundkörpers festgelegten kleinsten Kreis zu einem von einer radial innenliegenden Mantelfläche des Grundkörpers festgelegten größten Kreis, wobei die Mittelpunkte beider Kreise zusammenfallen.

Gemäß einer Ausführungsform erstreckt sich der Rücksprung in axialer Richtung über den ganzen ersten Abschnitt des Grundkörpers, was bedeutet, dass der (elastische) Dichtstoff über seine ganze axiale Erstreckung in den Rücksprung im Grundkörper eingesetzt ist.

Gemäß einer alternativen Ausführungsform erstreckt sich der Rücksprung in axialer Richtung über zwischen 20 % und 90% oder über zwischen 40 % und 85% oder über zwischen 60 % und 80% des ersten Abschnitts des Grundkörpers, was bedeutet, dass der (elastische) Dichtstoff bezogen auf seine axiale Erstreckung nur teilweise in den Rücksprung im Grundkörper eingesetzt ist.

Gemäß einer Ausführungsform erstreckt sich der Rücksprung in Umfangsrichtung vollständig um den Grundkörper herum; dann ist der eingesetzte (elastische) Dichtstoff für sich alleine betrachtet ringförmig.

Gemäß einer Ausführungsform beträgt eine Tiefe des Rücksprungs im ersten Abschnitt in radialer Richtung zwischen 0,25 mm und 2,5 mm oder zwischen 0,5 mm und 2,25 mm oder zwischen 1,0 mm und 2,0 mm. Ein Rücksprung mit einer solchen Tiefe stellt sicher, dass ausreichend (elastischer) Dichtstoff um den Grundkörper herum angeordnet werden kann, um die beabsichtigte Dichtwirkung zu erzielen.

Gemäß einer Ausführungsform erstreckt sich der Vorsprung in axialer Richtung über den ganzen ersten Abschnitt des Grundkörpers, und ist in der Folge in axialer Richtung an gleicher Position wie der (elastische) Dichtstoff angeordnet.

Gemäß einer alternativen Ausführungsform erstreckt sich der Vorsprung in axialer Richtung über zwischen 25 % und 95% oder über zwischen 45 % und 90% oder über zwischen 65 % und 85% des ersten Abschnitts des Grundkörpers. Der Vorsprung kann in axialer Richtung des Grundkörpers entweder eine geringere Erstreckung als der (elastische) Dichtstoff aufweisen und vollständig im ersten Abschnitt liegen oder auch gegenüber dem ersten Abschnitt in axialer Richtung versetzt sein. Falls der Vorsprung gegenüber dem ersten Abschnitt in axialer Richtung versetzt ist, kann der Vorsprung sogar größer als der erste Abschnitt sein.

Gemäß einer Ausführungsform erstreckt sich der Vorsprung in Umfangsrichtung vollständig innerhalb des Grundkörpers herum. Gemäß einer alternativen Ausführungsform sind in Umfangsrichtung verteilt mehrere voneinander getrennte Vorsprünge vorgesehen. Die Verwendung von mehreren in Umfangsrichtung verteilt angeordneten Vorsprüngen vermeidet zu große Wandstärken des Grundkörpers.

Gemäß einer Ausführungsform beträgt eine Höhe des Vorsprungs in radialer Richtung gegenüber der radial innenliegenden Mantelfläche des Grundkörpers zwischen 0,25 mm und 2,5 mm oder zwischen 0,5 mm und 2,25 mm oder zwischen 1,0 mm und 2,0 mm. Gemäß einer Ausführungsform ist die Höhe des Vorsprungs in radialer Richtung kleiner oder gleich der Dicke es (elastischen) Dichtstoffs in radialer Richtung.

Optional weist der Grundkörper im ersten Abschnitt an seiner radial innenliegenden Mantelfläche ebenfalls einen (elastischen) Dichtstoff auf. Indem der Grundkörper auch in seinem Inneren einen (elastischen) Dichtstoff aufweist, wird die Dichtwirkung gegenüber einer in den Verbundabdichtungs-Dübel eingedrehten Schraube verbessert.

Gemäß einer Ausführungsform erstreckt sich der im ersten Abschnitt an der radial innenliegenden Mantelfläche angeordnete (elastische) Dichtstoff in axialer Richtung über den ganzen ersten Abschnitt des Grundkörpers.

Gemäß einer Ausführungsform umgibt der (elastische) Dichtstoff den Grundkörper an seiner radial innenliegenden Mantelfläche in Umfangsrichtung des Grundkörpers vollständig und bildet so einen Ring.

Gemäß einer Ausführungsform ist der (elastische) Dichtstoff ein Elastomerkörper, der den Grundkörper an seiner radial außenliegenden Mantelfläche und/oder an seiner radial innenliegenden Mantelfläche in Umfangsrichtung des Grundkörpers vollständig umgibt, und so einen Ring bildet. Gemäß einer Ausführungsform ist der Elastomerkörper eine Kautschuk-Art, Perfluorkautschuk (FFKM oder FFPM), Polyethylen (PE) oder Polytetrafluorethylen (PTFE).

Gemäß einer von den Ansprüchen nicht umfassten zweiten Ausführungsform, welche auch mit der vorstehenden ersten Ausführungsform kombiniert werden kann, weist der hohlzylindrische Grundkörper des Verbundabdichtungs-Dübels mit der Öffnung für die Schraube in seinem Inneren einen pastösen Dichtstoff auf. Da der Grundkörper von Verbundabdichtungs-Dübeln 25 typischerweise nicht aus pastösem Material besteht, ist der Dichtstoff somit aus einem Material gebildet, welches sich von dem Material, aus welchem der Grundkörper gebildet ist, unterscheidet. Weiter weist eine Außenwand des Grundkörpers mehrere Durchbrüche und/oder Schwächungen auf. Dabei wird unter einer "Schwächung" gemäß einer Ausführungsform ein Bereich verstanden, in dem eine Dicke der Außenwand um wenigstens 50 % und insbesondere um wenigstens 75% und weiter insbesondere um wenigstens 90% gegenüber der mittleren Dicke der Außenwand an dieser Stelle reduziert ist. Beim Eindrehen einer Schraube in die Öffnung des Verbundabdichtungs-Dübels wird der pastöse Dichtstoff durch die Durchbrüche / Schwächungen in der Außenwand des Grundkörpers hindurch aus dem Inneren des Grundkörpers radial nach außerhalb des Grundkörpers gedrückt. In der Folge werden freie Räume in einer Durchdringung, in welche der Verbundabdichtungs-Dübel eingesetzt ist, vom pastösen Dichtstoff ausgefüllt, wodurch die Durchdringung gegenüber dem Verbundabdichtungs-Dübel und der Schraube abgedichtet wird.

Durchsetzt die Durchdringung dabei eine Verbundabdichtung, bewirkt der nach außerhalb des Grundkörpers gepresste pastöse Dichtstoff eine Dichtwirkung, welche in axialer Richtung des Verbundabdichtungs-Dübels die Verbundabdichtung und Abschnitte zu beiden Seiten der Verbundabdichtung umfasst und somit schichtübergreifend wirkt. Gleichzeitig bewirkt im Inneren des Grundkörpers verbleibender pastöser Dichtstoff eine gute Abdichtung gegenüber einer in den Verbundabdichtungs-Dübel eingedrehten Schraube.

Gemäß einer nicht beanspruchten Ausführungsform ist der Verbundabdichtungs-Dübel außerhalb des Grundkörpers frei von pastösem Dichtstoff.

Gemäß einer nicht beanspruchten Ausführungsform ist der pastöse Dichtstoff in einem in axialer Richtung des hohlzylindrischen Grundkörpers mit der Öffnung für die Schraube ersten Ende vorgesehen.

Gemäß einer nicht beanspruchten Ausführungsform ist der hohlzylindrische Grundkörper in axialer Richtung vollständig oder zu wenigstens 2/3 oder zu wenigstens der Hälfte oder zu wenigstens einem Drittel mit dem pastösen Dichtstoff gefüllt.

Gemäß einer nicht beanspruchten Ausführungsform sind die Durchbrüche und/oder Schwächungen voneinander in Umfangsrichtung beabstandet.

Gemäß einer nicht beanspruchten Ausführungsform sind die Durchbrüche und/oder Schwächungen in Umfangsrichtung gleichmäßig um den Grundkörper herum verteilt angeordnet. Dabei sind die Durchbrüche Langlöcher, deren Längsachsen in axialer Richtung des Grundkörpers orientiert sind oder mit der axialen Richtung des Grundkörpers einen Winkel von zwischen 5 ° und 60 ° einschließen oder mit der axialen Richtung des Grundkörpers einen Winkel von zwischen 5 ° und 30 ° einschließen. Weiter sind die Schwächungen Langnuten, deren Längsachsen in axialer Richtung des Grundkörpers orientiert sind oder mit der axialen Richtung des Grundkörpers einen Winkel von zwischen 5 ° und 60 ° einschließen oder mit der axialen Richtung des Grundkörpers einen Winkel von zwischen 5 ° und 30 ° einschließen. Durch die weitgehend axiale Orientierung der Durchbrüche / Schwächungen wird eine Herabsetzung der von dem Verbundabdichtungs-Dübel in axialer Richtung aufnehmbaren Zugkraft gering gehalten.

Gemäß einer nicht beanspruchten Ausführungsform weist der Grundkörper eine erste Trennwand auf, welche zwischen dem pastösen Dichtstoff und dem ersten Ende des Grundkörpers angeordnet ist und den pastösen Dichtstoff gegenüber der Öffnung des Grundkörpers abschließt. Auf diese Weise kann ein Austrocknen oder Aushärten des pastösen Dichtstoffes vermieden werden. Gemäß einer Ausführungsform ist die erste Trennwand einstückig mit dem Grundkörper gebildet. Gemäß einer alternativen Ausführungsform ist die erste Trennwand in den Grundkörper eingepresst oder eingeklebt oder eingeschweißt oder eingelegt. Es wird betont, dass die Trennwand auch die Form eines Pfropfens aufweisen und so ausgebildet sein kann, dass sie aus dem Grundkörper entfernt werden kann.

Gemäß einer nicht beanspruchten Ausführungsform weist der Grundkörper eine zweite Trennwand auf, welche in axialer Richtung von der ersten Trennwand beabstandet ist. Dann kann der pastöse Dichtstoff zwischen der ersten Trennwand und der zweiten Trennwand angeordnet sein. In diesem Fall dienen die beiden Trennwände zur Begrenzung des Abschnitts, in welchem der pastöse Dichtstoff vorhanden ist. Gemäß einer Ausführungsform ist die zweite Trennwand einstückig mit dem Grundkörper gebildet. Gemäß einer alternativen Ausführungsform ist die zweite Trennwand in den Grundkörper eingepresst oder eingeklebt oder eingeschweißt oder eingelegt.

Gemäß einer nicht beanspruchten Ausführungsform ist eine Dicke der (ersten und/oder zweiten) Trennwand gegenüber einer mittleren Dicke der Außenwand des Grundkörpers um wenigstens 50 % oder um wenigstens 75% oder um wenigstens 90% reduziert. Auf diese Weise ist sichergestellt, dass die (erste und/oder zweite) Trennwand leicht von einer Schraube durchdrungen werden können. Gemäß einer Ausführungsform ist die Dicke der zweiten Trennwand größer oder gleich der Dicke der ersten Trennwand.

Gemäß einer nicht beanspruchten Ausführungsform ist der pastöse Dichtstoff ein Butylkautschuk-Dichtstoff oder ein Polysulfid-Dichtstoff oder ein Silikon-Dichtstoff oder ein Polyurethan-Dichtstoff oder ein MS-Polymer-Dichtstoff oder ein Harz. Derartige Materialien sind sicher zu verarbeiten, lassen sich gut mit Verbundabdichtungssystemen kombinieren und weisen gute und dauerhafte Dichtungseigenschaften auf.

Gemäß einer nicht beanspruchten Ausführungsform weist der Grundkörper in axialer Richtung einen Abschnitt auf, in dem der Grundkörper frei von Dichtstoff ist, wobei dieser Abschnitt an das erste Ende des Grundkörpers angrenzt und sich von dem ersten Ende um zwischen 1 mm und 10 mm oder um zwischen 2,5 mm und 8 mm oder um zwischen 3 mm und 6 mm in axialer Richtung erstreckt. Auf diese Weise wird vermieden, dass der Dichtstoff nach außerhalb einer Durchdringung, in welche der Verbundabdichtungs-Dübel eingesetzt ist, dringt.

Gemäß einer Ausführungsform erstreckt sich der Abschnitt des Grundkörpers, in welchem der Grundkörper Dichtstoff aufweist, über zwischen 10 mm und 15 mm in axialer Richtung.

Gemäß einer Ausführungsform erstreckt sich der Abschnitt des Grundkörpers, in welchem der Grundkörper Dichtstoff aufweist, in axialer Richtung über zwischen 20 % und 70 % der Gesamtlänge des Grundkörpers oder über zwischen 30 % und 60 % der Gesamtlänge des Grundkörpers oder über zwischen 40 % und 50 % der Gesamtlänge des Grundkörpers.

Auf diese Weise ist der Verbundabdichtungs-Dübel gut zur Abdichtung von in Verbundabdichtungssystemen eingebrachten Durchdringungen angepasst, da eine derartige axiale Erstreckung des Dichtstoffs schichtübergreifend wirken kann, indem in axialer Richtung des Verbundabdichtungs-Dübels im Bereich der Abdichtung der Verbundabdichtung und zu beiden Seiten der Abdichtung Dichtstoff angeordnet ist.

Gemäß einer Ausführungsform ist der Grundkörper aus Kunststoff und insbesondere aus Polyamid oder aus Metall gebildet.

Gemäß weiterer von den Ansprüchen nicht umfasster Ausführungsformen, die mit den vorstehenden Ausführungsformen kombiniert werden können, weist ein Verbundabdichtungs-Dübel einen hohlzylindrischen Grundkörper mit einer an einem in axialer Richtung ersten Ende angeordneten Öffnung zur Aufnahme einer Schraube auf. Dabei weist der Grundkörper an seinen radial innenliegenden und radial außenliegenden Außenflächen jeweils Elastomer-Schichten auf, die sowohl in axialer Richtung als auch in Umfangsrichtung des Verbundabdichtungs-Dübels durchgehend ausgebildet sind. Dabei kann es sich auch um eine einzige gemeinsame Elastomer-Schicht handeln; somit kann der Grundkörper insgesamt aus Elastomer gebildet sein. Gemäß einer Ausführungsform beträgt eine Erstreckung des hohlzylindrischen Grundkörpers in axialer Richtung wenigstens 10 mm oder wenigstens 15 mm.

Aufgrund seiner Elastomer-Schichten weist der Verbundabdichtungs-Dübel gute Dichteigenschaften sowohl gegenüber einer Innenwand der Durchdringung als auch gegenüber einer über die Öffnung im Grundkörper eingeführten Schraube auf. Durchsetzt die Durchdringung dabei eine Verbundabdichtung, die wie vorstehend beschrieben aus einer keramischen Fliese oder Platte, Fugenmörtel zwischen den Fliesen oder Platten, unter der Fliese oder Platte befindlichem Fliesenkleber und einer Abdichtung gebildet sein kann, bewirkt die an der radial außenliegenden Außenfläche vorhandene Elastomer-Schicht eine Dichtwirkung, welche in axialer Richtung des Verbundabdichtungs-Dübels die Abdichtung der Verbundabdichtung und Abschnitte zu beiden Seiten der Abdichtung umfasst und somit schichtübergreifend wirkt.

Gemäß einer nicht beanspruchten Ausführungsform weist der Grundkörper zwischen seinen radial innenliegenden und radial außenliegenden Elastomer-Schichten eine Schicht aus Polyamid oder Metall auf. Ein solcher Kern erhöht die Stabilität des Verbundabdichtungs-Dübels erheblich und erleichtert so ein Einführen des Verbundabdichtungs-Dübels entlang seiner axialen Richtung in eine Durchdringung. Weiter verhindert ein solcher Kern, dass die Elastomer-Schichten durch eine Schraube versehentlich in radialer Richtung ganz durchdrungen werden.

Gemäß einer nicht beanspruchten Ausführungsform beträgt die Dicke jeder Elastomer-Schicht in radialer Richtung zwischen 1 mm und 3 mm oder zwischen 1,5 mm und 2 mm.

Gemäß einer nicht beanspruchten Ausführungsform beträgt die Dicke der Schicht aus Polyamid oder Metall in radialer Richtung zwischen 0,25 mm und 1,5 mm oder zwischen 0,4 mm und 0,8 mm.

Gemäß einer Ausführungsform weist der Grundkörper in einem Abschnitt, der optional frei von Dichtstoff ist, wenigstens ein Paar von in axialer Richtung verlaufenden Schlitzen auf, welche eine Mantelfläche des Grundkörpers durchdringen. Diese Schlitze erleichtern ein Aufspreizen des Verbundabdichtungs-Dübels in dem Abschnitt.

Gemäß einer Ausführungsform weist der Grundkörper in einem Abschnitt, der optional frei von Dichtstoff ist, auf seiner radial außenliegenden Mantelfläche in Umfangsrichtung orientierte Rillen auf, welche sich in axialer Richtung mit in Umfangsrichtung orientierten Vorsprüngen abwechseln. Eine derartige Oberfläche kann sich gut mit der Innenwand einer Durchdringung, in welche der Verbundabdichtungs-Dübel eingesetzt ist, verzahnen.

Gemäß einer Ausführungsform weist der Grundkörper an seinem ersten Ende benachbart zur Öffnung einen radial nach außen gerichteten Flansch auf. Ein solcher Flansch verhindert, dass der Verbundabdichtungs-Dübel zu tief in eine Durchdringung eingesetzt wird. Zudem schließt ein solcher Flansch die Durchdringung optisch ab.

Gemäß einer nicht beanspruchten Ausführungsform ist der Grundkörper an seinem dem ersten Ende in axialer Richtung gegenüberliegenden zweiten Ende geschlossen. Dabei kann dieses zweite Ende auch verrundet sein, um ein Einführen des Verbundabdichtungs-Dübels in eine Durchdringung zu erleichtern.

Ausführungsformen eines Verfahrens zur Abdichtung einer Durchdringung durch ein Verbundabdichtungssystem weisen die Schritte des Bereitstellens eines Verbundabdichtungs-Dübels wie vorstehend beschrieben, des Einsetzens des Verbundabdichtungs-Dübels in die Durchdringung, des Bereitstellens einer Schraube und des Einschraubens der Schraube in den Grundkörper des Verbundabdichtungs-Dübels auf. Dabei ist ein Außendurchmesser des Grundkörpers des Verbundabdichtungs-Dübels an einen Innendurchmesser der Durchdringung und ein Außendurchmesser der Schraube an einen Innendurchmesser des Grundkörpers des Verbundabdichtungs-Dübels angepasst.

Der vorstehend beschriebene Verbundabdichtungs-Dübel ist besonders gut für eine Verwendung zur Abdichtung einer Durchdringung durch ein Verbundabdichtungssystem geeignet, da Dichtstoff in axialer Richtung des Verbundabdichtungs-Dübels im Bereich der Abdichtung der Verbundabdichtung und zu beiden Seiten der Abdichtung angeordnet ist und ein derartiger Verbundabdichtungs-Dübel somit schichtübergreifend wirken kann. Ausführungsformen eines Systems zur Abdichtung einer Durchdringung durch ein Verbundabdichtungssystem, weisen einen in die Durchdringung eingesetzten Verbundabdichtungs-Dübel und eine in den Verbundabdichtungs-Dübel eingedrehte Schraube auf. Dabei sind der Verbundabdichtungs-Dübel und die Schraube gemeinsam ausgebildet, eine für eine jeweilige Beanspruchungsklasse des Verbundabdichtungssystems geforderte Dichtigkeit auch im Bereich der Durchdringung sicherzustellen. Bei dem Verbundabdichtungs-Dübel handelt es sich um den vorstehend beschriebener, von den Ansprüchen umfassten Verbundabdichtungs-Dübel.

Ausführungsformen der Erfindung werden nachfolgend anhand von Figuren näher erläutert. Hierbei zeigt:
- Figuren 1A und 1C: Schnittansichten durch einen Verbundabdichtungs-Dübel gemäß einer ersten Ausführungsform in unterschiedlichen Betriebszuständen;
- Figur 1B: eine Querschnittsansicht entlang der Schnittlinie A-A durch den Aufbau aus Figur 1A;
- Figuren 2A und 2B: Schnittansichten und Querschnittsansichten durch einen Verbundabdichtungs-Dübel gemäß einer nicht von den Ansprüchen umfassten zweiten Ausführungsform in unterschiedlichen Betriebszuständen; und
- Figuren 3A und 3B: Schnittansichten und Querschnittsansichten durch einen Verbundabdichtungs-Dübel gemäß einer nicht von den Ansprüchen umfassten dritten Ausführungsform in unterschiedlichen Betriebszuständen.

In den Figuren werden gleiche oder ähnliche Elemente mit den gleichen oder ähnlichen Bezugszeichen bezeichnet.

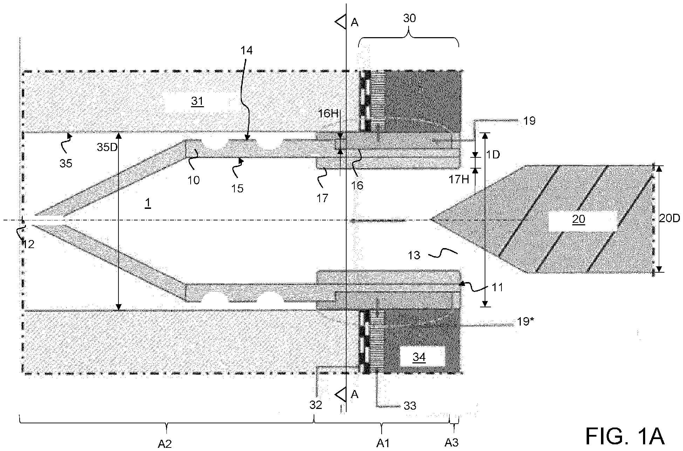

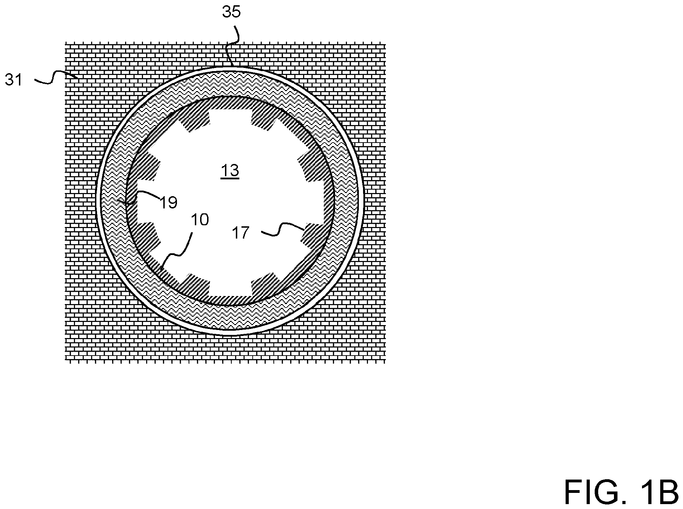

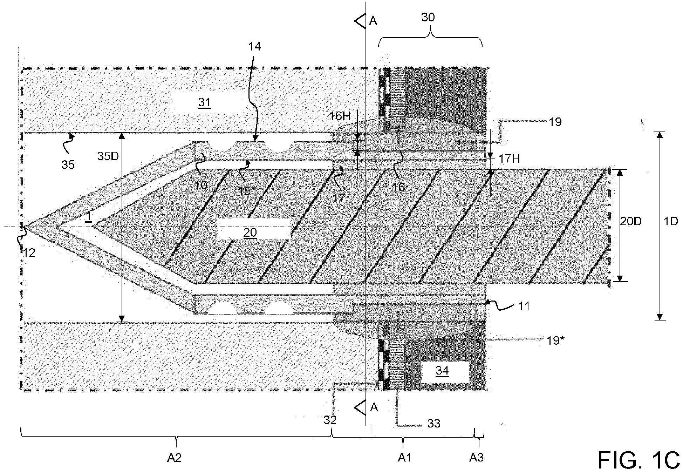

Figuren 1A bis 1C zeigen eine erste Ausführungsform eines Verbundabdichtungs-Dübels 1, welcher zur Abdichtung einer Durchdringung 35, wie beispielsweise eines Bohrloches, durch ein Verbundabdichtungssystem 30 geeignet ist. Dabei zeigt die Figur 1A eine Schnittansicht entlang der Längsachse des Verbundabdichtungs-Dübels vor einem Eindrehen einer Schraube 20 und Figur 1C die gleiche Schnittansicht nach Eindrehen der Schraube 20. Figur 1B zeigt eine Querschnittsansicht durch die Ansicht aus Figur 1A entlang der Schnittlinie A-A.

Das in dieser Ausführungsform gezeigte Verbundabdichtungssystem 30 weist eine 0,5 mm starke Abdichtungsbahn 32 auf, welche auf einen Baukörper in Form einer Mauer 31 aufgebracht ist. Die Abdichtungsbahn 32 trägt mittels einer 3 mm starken Schicht Fliesenkleber 33 Fliesen 34 mit einer Stärke von 10 mm. Die Durchdringung 34, welche in der gezeigten Ausführungsform einen Innendurchmesser 34D von 10 mm aufweist, durchdringt die Abdichtungsbahn 32, den Fliesenkleber 33 und die Fliesen 34 vollständig und dringt in die Mauer 31 ein.

Der Verbundabdichtungs-Dübel 1 wird im Wesentlichen von einem hohlzylindrischen Grundkörper 10 aus Polyamid gebildet.

An seinem ersten Ende 11 weist der Grundkörper 10 eine Öffnung 13 für die Schraube 20 auf.

In axialer Richtung des Grundkörpers 10 schließt sich an das erste Ende 11 ein Abschnitt A3 an, in welchem der Grundkörper 10 einen radial nach außen gerichteten Flansch aufweist. Dieser Abschnitt A3 erstreckt sich in der gezeigten Ausführungsform um 1 mm in axialer Richtung.

An diesen flanschbildenden Abschnitt A3 schließt sich ein (erster) Abschnitt A1 an, in dem der Grundkörper 10 an seiner radial außenliegenden Mantelfläche 14 einen elastischen Dichtstoff in Form eines ringförmigen Elastomerkörpers 19 aus Kautschuk aufweist. Dieser ringförmige Elastomerkörper 19 erstreckt sich in axialer Richtung des Grundkörpers über 12 mm und weist somit eine größere Längserstreckung als die Dicke der Verbundabdichtung 30 auf. Der ringförmige Elastomerkörper 19 ist in axialer Richtung zu 90% in einen Rücksprung 16 eingesetzt, der an der radial außenliegenden Mantelfläche 14 des Grundkörpers 10 ausgebildet ist und sich in Umfangsrichtung ganz um den Grundkörper 10 herum erstreckt. In der gezeigten Ausführungsform beträgt eine Tiefe 16H des Rücksprungs gegenüber der angrenzenden Mantelfläche 14 des Grundkörpers 10 rund 1 mm. Auf diese Weise fixiert der Rücksprung 16 die Lage des Elastomerkörpers 19 relativ zum Grundkörper 10. Ersichtlich wird in der gezeigten Ausführungsform das dem ersten Ende 11 des Grundkörpers 10 zugewandte Ende des Rücksprungs 16 von dem Flansch begrenzt.

An den von dem ringförmigen Elastomerkörper 19 festgelegten (ersten) Abschnitt A1 schließt sich in axialer Richtung des Grundkörpers 10 ein (zweiter) Abschnitt A2 an, der frei von dem Elastomerkörper 19 ist, und an dessen dem ersten Ende 11 in axialer Richtung des gegenüberliegenden zweiten Ende 12 der Grundkörper 10 geschlossen ist und eine Spitze aufweist. Die Spitze erleichtert ein Einführen des Grundkörpers 10 in die Durchdringung 35. Um ein Aufspreizen des Grundkörpers 10 bei eingeführter Schraube 20 zu begünstigen wird die Mantelfläche des Grundkörpers 10 von einem Paar in axialer Richtung orientierter Schlitze durchsetzt; diese sind in den Figuren 1A und 1C im Bereich der Spitze des Grundkörpers 10 zu sehen. Um zudem eine Verzahnung mit der Mauer 31 bei eingeführter Schraube 20 zu verbessern, weist der Grundkörper 10 in diesem Abschnitt A2 auf seiner radial außenliegenden Mantelfläche in Umfangsrichtung orientierte Rillen auf, welche sich in axialer Richtung mit in Umfangsrichtung orientierten Vorsprüngen abwechseln.

In dieser ersten Ausführungsform weist der Grundkörper 10 in dem von dem ringförmigen Elastomerkörper 19 festgelegten (ersten) Abschnitt A1 an seiner radial innenliegenden Mantelfläche 15 Vorsprünge 17 auf, die sich in radialer Richtung gegenüber der benachbarten Mantelfläche 15 um eine Höhe 17H von 1 mm und in axialer Richtung über die ganze Länge des ringförmigen Elastomerkörpers 19 erstrecken.

Aus Figur 1B ist gut ersichtlich, dass acht Vorsprünge 17 gleichmäßig in Umfangsrichtung des Grundkörpers 10 verteilt angeordnet und einstückig mit dem Grundkörper 10 ausgebildet sind. Es wird betont, dass in der in Figur 1B gezeigten Querschnittsansicht der besseren Übersichtlichkeit wegen nur die Öffnung 13 des Grundkörpers 10 für die Schraube 20 gezeigt ist, und nicht die in axialer Richtung beabstandet zur Schnittlinie A-A kommende Innenwand der Spitze des Grundkörpers 10.

Wie sich aus einer Zusammenschau der Figuren 1A und 1C ergibt, begünstigen die Vorsprünge 17, dass der ringförmige Elastomerkörper 19 beim Einschrauben der Schraube 20 in den Verbundabdichtungs-Dübel 1 radial nach außerhalb des Grundkörpers 10 gedrückt wird und so eine Pressdichtung zur Durchdringung 35 und insbesondere zur Verbundabdichtung 30 herstellt. Dabei dringt der ringförmige Elastomerkörper 19 in Spalten und Ritzen in der Durchdringung 35 ein, was in Figur 1C symbolisch durch den mit dem Bezugszeichen 19* gekennzeichneten Bereich verdeutlicht wird. Da der ringförmige Elastomerkörper 19 nicht nur im Bereich der Abdichtungsbahn 32 der Verbundabdichtung 30, sondern in axialer Richtung der Durchdringung 35 zu beiden Seiten der Abdichtungsbahn 32 angeordnet ist, wirkt der Verbundabdichtungs-Dübel 1 schichtübergreifend. Ersichtlich ist hierfür ein Außendurchmesser 1D des Verbundabdichtungs-Dübels 1 an einen Innendurchmesser 35D der Durchdringung 35 und ein Außendurchmesser 20D der Schraube 20 an einen Innendurchmesser des Verbundabdichtungs-Dübels 1 anzupassen. Zusätzlich zu dem an der radial außenliegenden Mantelfläche 14 des Grundkörpers 10 vorgesehenen ringförmigen Elastomerkörper 19 kann auch an der radial innenliegenden Mantelfläche des Grundkörpers 10 ein ringförmiger Elastomerkörper vorgesehenen sein, der die Abdichtung gegenüber der Schraube bereitstellt. Dies ist in den Figuren aber nicht eigens gezeigt.

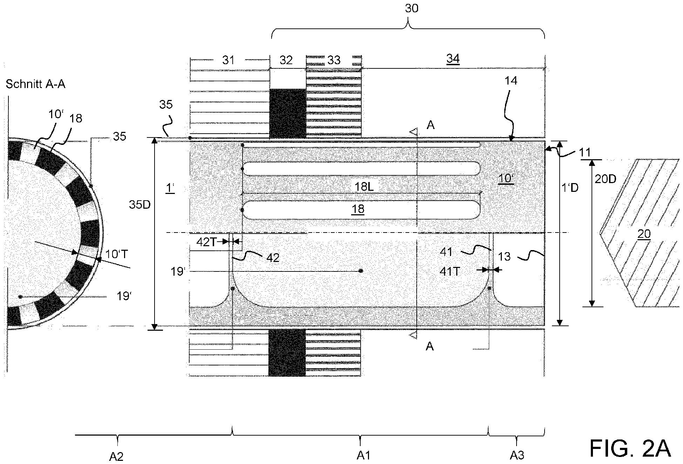

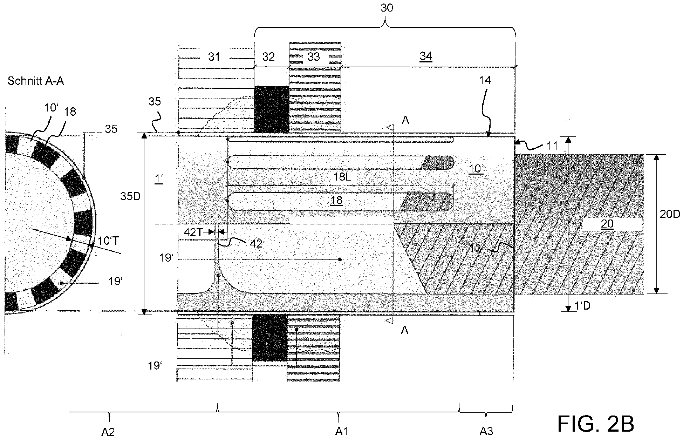

Im Folgenden wird unter Bezugnahme auf Figuren 2A und 2B eine nicht von den Ansprüchen umfasste zweite Ausführungsform eines Verbundabdichtungs-Dübels 1', welcher zur Abdichtung einer Durchdringung 35 durch ein Verbundabdichtungssystem 30 geeignet ist, erläutert. Dabei wird insbesondere auf Unterschiede zur vorstehend beschriebenen ersten Ausführungsform eingegangen und ansonsten auf die Ausführungen zur ersten Ausführungsform verwiesen. Figur 2A zeigt rechts eine Schnittansicht entlang der Längsachse des Verbundabdichtungs-Dübels 1' vor einem Eindrehen einer Schraube 20 und links eine Querschnittsansicht entlang der Schnittlinie A-A durch die rechte Figur. Figur 2B zeigt die gleichen Ansichten nach Eindrehen der Schraube 20.

In der zweiten Ausführungsform ist die Dichtschicht 32 des Verbundabdichtungssystems 30 anders als in der ersten Ausführungsform nicht durch eine Abdichtungsbahn sondern durch eine 2 mm dicke Schicht eines ehemals flüssigen Abdichtungsstoffs gebildet, welcher auf eine Trockenbauwand 31 aufgebracht worden ist. Der Fliesenkleber 33 und die Fliesen 34 des Verbundabdichtungssystems 30 entsprechen hingegen der ersten Ausführungsform.

Auch der Verbundabdichtungs-Dübel 1' gemäß der zweiten Ausführungsform weist einen hohlzylindrischen Grundkörper 10' aus Polyamid und in axialer Richtung an einem ersten Ende 11 eine Öffnung 13 zur Aufnahme einer Schraube 20 auf.

In den Figuren 2A und 2B ist der Grundkörper 10' jeweils nicht über seine ganze Länge gezeigt; so ist insbesondere ein dem ersten Ende 11 gegenüberliegendes Ende nicht gezeigt. Hier kann der Grundkörper 10' aber eine Form aufweisen, welche der Form des Grundkörpers 10 gemäß der ersten Ausführungsform im Abschnitt A2 (welcher frei von Dichtstoff ist) entspricht. Insbesondere kann der Grundkörper 10' an seinem dem ersten Ende 11 in axialer Richtung gegenüberliegenden zweiten Ende geschlossen sein.

Im Unterschied zur ersten Ausführungsform weist der Grundkörper 10' in seinem Inneren einen pastösen Dichtstoff 19' aus MS-Polymer auf. An seiner in radialer Richtung äußeren Oberfläche ist der Grundkörper 10' frei von dem pastösen Dichtstoff 19'. Das Vorhandensein dieses Dichtstoffes 19' legt auch in dieser Ausführungsform einen (ersten) Abschnitt A1 des Grundkörpers 10' in axialer Richtung fest. Eine Außenwand des Grundkörpers 10' weist in diesem Abschnitt A1 zwölf Langlöcher 18 auf, die voneinander in Umfangsrichtung des Grundkörpers 10' gleichmäßig verteilt angeordnet sind. Längsachsen der Langlöcher 18 sind in axialer Richtung des Grundkörpers 10' orientiert. Die Länge 18L der Langlöcher 18 beträgt in der gezeigten Ausführungsform jeweils 13 mm und übertrifft somit die Dicke herkömmlicher Verbundabdichtungssysteme 30.

In der gezeigten Ausführungsform wird der (erste) Abschnitt A1, in welchem der pastöse Dichtstoff 19' angeordnet ist, durch erste und zweite Trennwände 41, 42 begrenzt. Die erste Trennwand 41 schließt den pastösen Dichtstoff 19' gegenüber der Öffnung 13 des Grundkörpers 10' ab, und die zweite Trennwand 42 schließt den pastösen Dichtstoff 19' gegenüber einem (zweiten) Abschnitt A2 des Grundkörpers 10' ab, der frei von Dichtstoff ist. Durch die Verwendung der Trennwände 41, 42 kann die Menge an benötigtem pastösen Dichtstoff 19' gering gehalten werden. Weiter kann so ein unerwünschtes Austreten oder Austrocknen des pastösen Dichtstoff 19' vermieden werden. In der gezeigten Ausführungsform wurde die zweite Trennwand 42 vor einem Einfüllen von pastösem Dichtstoff 19' und die erste Trennwand 41 nach einem Einfüllen von pastösem Dichtstoff 19' mit einer Innenwand des Grundkörpers 10' verschweißt. Wie gut aus Figur 2A ersichtlich, weisen die Trennwände 41 und 42 Wandstärken 41T und 42T auf, welche lediglich 15 % einer mittleren Wandstärke 10'T des Grundkörpers 10' entsprechen. Dabei wird unter einer mittleren Wandstärke 10'T (entspricht hier der mittleren Dicke der Außenwand) des Grundkörpers 10' der radiale Abstand zwischen einem von einer radial außenliegenden Mantelfläche 14 des Grundkörpers 10' festgelegten kleinsten Kreis zu einem von einer radial innenliegenden Mantelfläche des Grundkörpers 10' festgelegten größten Kreis verstanden, wobei die Mittelpunkte beider Kreise zusammenfallen. In der Folge können die Trennwände 41 und 42 leicht von der Schraube 20 durchdrungen werden.

Ein weiterer Unterschied zwischen der ersten und der zweiten Ausführungsform ist, dass der Abschnitt A3, welcher frei von Dichtstoff ist, und dem ersten Ende 11 des Grundkörpers 10' mit der Öffnung 13 benachbart ist, in der zweiten Ausführungsform eine wesentlich größere Längserstreckung von rund 4 mm und keinen Flansch aufweist. Durch die größere Länge dieses Abschnitts A3 wird vermieden, dass pastöser Dichtstoff 19' aus der Durchdringung 35 herausgedrückt wird.

Beim Einführen der Schraube 20 in die Öffnung 13 des Grundkörpers 10' presst die Schraube zunächst eine Außenwand des Grundkörpers 10' im Abschnitt A3 nach außen und sorgt so für eine gewisse Pressdichtung zu einer Innenwand der Durchdringung 35. Anschließend zerstört die Schraube 20 die erste Trennwand 41 und presst den pastösen Dichtstoff 19' über die Langlöcher 18 nach außerhalb des Grundkörpers 10', da der pastöse Dichtstoff 19' von der zweiten Trennwand 42 daran gehindert wird, in axialer Richtung auszuweichen. Eine sich hierdurch ergebende Verfüllzone für den pastösen Dichtstoff 19' ist in Figur 2B schematisch gezeigt. Auch in der zweiten Ausführungsform erstreckt sich die Verfüllzone nicht nur im Bereich der Dichtschicht 32 des Verbundabdichtungssystems 30, sondern in axialer Richtung der Durchdringung 35 zusätzlich zu beiden Seiten der Dichtschicht 32. Somit wirkt der Verbundabdichtungs-Dübel 1 auch hier schichtübergreifend. Anschließend zerstört die Schraube 20 auch die zweite Trennwand 42 und dringt in den von Dichtstoff freien Abschnitt A2 des Grundkörpers 10' vor. Der letztgenannte Abschnitt A2 dient insbesondere der mechanischen Befestigung des Verbundabdichtungs-Dübels 1' in der Durchdringung 35.

Auch in der zweiten Ausführungsform ist ein Außendurchmesser 20D der Schraube 20 an einen Innendurchmesser des Grundkörpers 10' des Verbundabdichtungs-Dübels 1` und ein Außendurchmesser 1'D des Verbundabdichtungs-Dübels 1' an einen Innendurchmesser 35D der Durchdringung 35 anzupassen und somit geeignet zu wählen.

Auch wenn in der vorstehend beschriebenen zweiten Ausführungsform Langlöcher vorgesehen wurden, um einen radialen Austritt des pastösen Dichtstoffes aus dem Grundkörper des Verbundabdichtungs-Dübels zu ermöglichen, erkennt der Fachmann, dass die Erfindung nicht auf die Verwendung von Langlöchern beschränkt ist. Vielmehr ist es möglich, anstelle der Langlöcher Schwächungen vorzusehen, in denen eine Dicke der Außenwand um wenigstens 50 % gegenüber einer mittleren Dicke der Außenwand reduziert ist. In der Folge reißen diese Schwächungen beim Eindrehen der Schraube aufgrund des auf den pastösen Dichtstoff ausgeübten Drucks auf und geben den Dichtstoff radial nach außerhalb des Grundkörpers frei. Dabei erkennt der Fachmann, dass es für eine einwandfreie Funktionsweise erforderlich ist, dass der Widerstand, welcher dem pastösen Dichtstoff in axialer Richtung entgegen gesetzt wird, größer sein muss, als der Widerstand, den die Schwächungen dem pastösen Dichtstoff entgegensetzen. In der Folge müsste die zweite Trennwand wesentlich dicker ausgeführt werden, als in Figuren 2A und 2B gezeigt und vorstehend beschrieben.

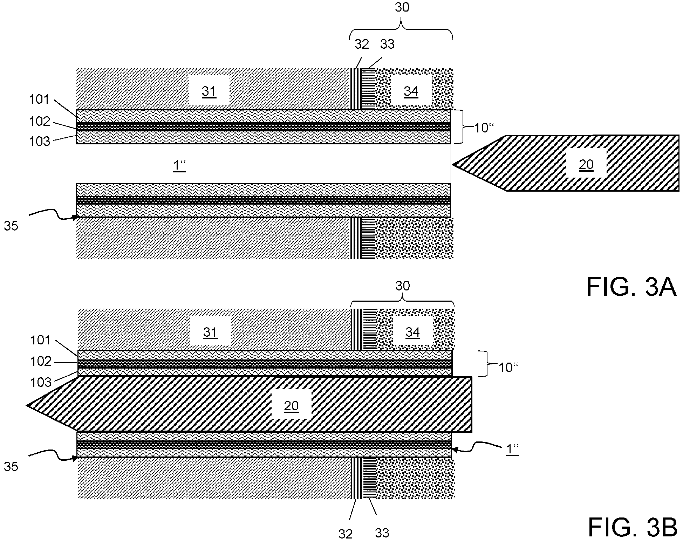

Im Folgenden wird unter Bezugnahme auf Figuren 3A und 3B eine nicht von den Ansprüchen umfasste dritte Ausführungsform eines Verbundabdichtungs-Dübels 1", welcher zur Abdichtung einer Durchdringung 35 durch ein Verbundabdichtungssystem 30 geeignet ist, erläutert. Dabei wird insbesondere auf Unterschiede zur vorstehend beschriebenen ersten Ausführungsform eingegangen und ansonsten auf die Ausführungen zur ersten Ausführungsform verwiesen. Figur 3A zeigt eine Schnittansicht entlang der Längsachse des Verbundabdichtungs-Dübels 1" vor einem Eindrehen einer Schraube 20 und Figur 3B zweigt die gleiche Ansicht nach Eindrehen der Schraube 20.

Das Verbundabdichtungssystem 30 entspricht dem Verbundabdichtungssystem der ersten Ausführungsform und weist eine auf einer Mauer 31 aufgebrachte Abdichtungsbahn 32 auf, welche mittels Fliesenkleber 33 Fliesen 34 trägt.

Im Unterschied zur ersten Ausführungsform ist der hohlzylindrische Grundkörper 10" des Verbundabdichtungs-Dübels 1" an seinen radial innenliegenden und außenliegenden Flächen aus Elastomer-Schichten 101, 103 aus Gummi gebildet. Damit weist der Verbundabdichtungs-Dübel 1" sowohl entlang seiner ganzen axialen Erstreckung als auch in Umfangsrichtung an seinen Außenflächen Elastomer auf. In der gezeigten Ausführungsform ist zwischen den Elastomer-Schichten 101, 103 ein Kern aus einer Polyamid-Schicht 102 mit einer in radialer Richtung gemessenen Wandstärke von 0,5 mm vorgesehen, welcher dem Verbundabdichtungs-Dübel 1" in axialer Richtung Stabilität verleiht und verhindert, dass eine Schraube die Elastomer-Schichten 101, 103 vollständig zerstören kann. Die Dicke der Elastomer-Schichten 101, 103 an den Außenflächen des Verbundabdichtungs-Dübels 1"beträgt ausgehend von der Polyamid-Schicht 102 in radialer Richtung gemessen sowohl zur Durchdringung 35 als auch zur Schraube 20 jeweils 1,5 mm.

Bei Eindrehen der Schraube 20 wird das Elastomer über alle Schichten des Verbundabdichtungssystems 30 hinweg an die Innenwand der Durchdringung 35 sowie die Außenwand der Schraube 20 gepresst und dichtet die Durchdringung 35 so vollständig gegen ein Eindringen von Wasser ab.

In der dritten Ausführungsform weist der Verbundabdichtungs-Dübel 1" anders als in der ersten Ausführungsform keinen seine Öffnung 13 für die Schraube 20 umgebenden Flansch auf. Ein solcher kann optional aber vorgesehen sein. Weiter weist der Verbundabdichtungs-Dübel 1" anders als in Figur 1 gezeigt keine Spitze auf, sondern ist hohlzylindrisch ausgebildet. Eine Spitze kann aber vorgesehen sein, um ein Einbringen des Verbundabdichtungs-Dübels 1" in die Durchdringung 35 zu erleichtern.

Auch wenn die erste, zweite und dritte Ausführungsform vorstehend getrennt erläutert worden sind, ist es für den Fachmann offensichtlich, dass alle Ausführungsformen auch miteinander kombiniert werden können. In einem solchen Fall weist der Verbundabdichtungs-Dübel der ersten oder dritten Ausführungsform in seinem Inneren zusätzlich pastöses Dichtmaterial und in der Mantelfläche entsprechende Öffnungen / Schwächungen auf, welche ein radiales Austreten des pastösen Dichtmaterials beim Einschrauben einer Schraube erlauben. Auch Trennwände können vorgesehen sein, welche das pastöse Dichtmaterial begrenzen. Alternativ kann der Verbundabdichtungs-Dübel der zweiten Ausführungsform an seiner radial außenliegenden und/oder radial innenliegenden Mantelfläche benachbart zur Öffnung für die Schraube einen insbesondere ringförmigen elastischen Dichtstoff aufweisen, welcher beim Einschrauben einer Schraube eine Pressdichtung zur Innenwand der Durchdringung bzw. zur Schraube herstellt und so vermeidet, dass aus dem Verbundabdichtungs-Dübel herausgedrückter pastöser Dichtstoff aus der Durchdringung austritt.

Zusammenfassend offenbart das vorliegende Dokument einen Verbundabdichtungs-Dübel zur Abdichtung einer Durchdringung durch ein Verbundabdichtungssystem, mit einem hohlzylindrischen Grundkörper. Dabei weist der Grundkörper in axialer Richtung an einem ersten Ende eine Öffnung zur Aufnahme einer Schraube auf. Weiter weist der Grundkörper wenigstens in einem Abschnitt einen elastischen oder plastischen Dichtstoff auf, wobei der Dichtstoff 19, 19' aus einem Material gebildet ist, welches sich von dem Material, aus welchem der Grundkörper gebildet ist, unterscheidet und beim Einschrauben der Schraube in den Verbundabdichtungs-Dübel radial nach außerhalb des Grundkörpers gedrückt wird. Gemäß einer alternativen Ausführungsform ist der ganze Grundkörper aus elastischem Dichtstoff gebildet.

Dabei gewährleistet der Verbundabdichtungs-Dübel und die Schraube in ihrem Zusammenwirken, dass eine für eine jeweilige Beanspruchungsklasse des Verbundabdichtungssystems geforderte Dichtigkeit auch im Bereich der Durchdringung sichergestellt ist.

## Patentansprüche

1. Verbundabdichtungs-Dübel (1) mit einem hohlzylindrischen Grundkörper (10), wobei der Grundkörper (10) in axialer Richtung an einem ersten Ende (11) eine Öffnung (13) zur Aufnahme einer Schraube (20) aufweist,
wobei der Grundkörper (10) in axialer Richtung einen ersten Abschnitt (A1) und einen zweiten Abschnitt (A2) aufweist, wobei der erste Abschnitt (A1) zwischen dem zweiten Abschnitt (A2) und dem ersten Ende (11) des Grundkörpers (10) angeordnet ist,
wobei der Grundkörper (10) an seiner radial außenliegenden Mantelfläche (14) und optional an seiner radial innenliegenden Mantelfläche im ersten Abschnitt (A1) einen Dichtstoff (19) aufweist und an seiner radial außenliegenden Mantelfläche (14) im zweiten Abschnitt (A2) frei von dem Dichtstoff (19) ist, wobei der Dichtstoff (19) aus einem Material gebildet ist, welches sich von dem Material, aus welchem der Grundkörper (10) gebildet ist, unterscheidet, und wobei der Dichtstoff (19) den Grundkörper (10) im ersten Abschnitt (A1) an seiner radial außenliegenden Mantelfläche (14) in Umfangsrichtung des Grundkörpers (10) vollständig umgibt, und so einen Ring bildet, und
wobei der Dichtstoff (19) aus einem elastischen Material gebildet und ausgebildet ist, beim Einschrauben einer Schraube (20) in den Verbundabdichtungs-Dübel (1) beidseitig einer Verbundabdichtung eine Abdichtung bereitzustellen;
**dadurch gekennzeichnet, dass**
der Grundkörper (10) im ersten Abschnitt (A1) an seiner radial innenliegenden Mantelfläche (15) einen sich in radialer und axialer Richtung erstreckenden Vorsprung (17) aufweist.

2. Verbundabdichtungs-Dübel (1) nach Anspruch 1,
wobei sich der erste Abschnitt (A1) des Grundkörpers (10), in welchem der Grundkörper (10) Dichtstoff (19) aufweist, in axialer Richtung des Grundkörpers (10) über zwischen 10 mm und 15 mm erstreckt; und/oder
wobei sich der erste Abschnitt des Grundkörpers (10), in welchem der Grundkörper (10) Dichtstoff (19) aufweist, in axialer Richtung über zwischen 20 % und 70 % der Gesamtlänge des Grundkörpers (10) oder über zwischen 30 % und 60 % der Gesamtlänge des Grundkörpers (10) oder über zwischen 40 % und 50 % der Gesamtlänge des Grundkörpers (10) erstreckt.

3. Verbundabdichtungs-Dübel (1) nach Anspruch 1 oder 2,
wobei das den Grundkörper (10) bildende Material im ersten Abschnitt (A1) an der radial außenliegenden Mantelfläche (14) des Grundkörpers (10) einen sich in axialer und radialer Richtung erstreckenden Rücksprung (16) aufweist, in welchen der Dichtstoff (19) ganz oder teilweise eingesetzt ist;
wobei sich der Rücksprung (16) in axialer Richtung über den ganzen ersten Abschnitt (A1) des Grundkörpers (10) erstreckt; oder
wobei sich der Rücksprung (16) in axialer Richtung über zwischen 20 % und 90% des ersten Abschnitts (A1) des Grundkörpers erstreckt; oder
wobei sich der Rücksprung (16) in axialer Richtung über zwischen 40 % und 85% des ersten Abschnitts (A1) des Grundkörpers (10) erstreckt; oder
wobei sich der Rücksprung (16) in axialer Richtung über zwischen 60 % und 80% des ersten Abschnitts (A1) des Grundkörpers (10) erstreckt.

4. Verbundabdichtungs-Dübel (1) nach Anspruch 3, wobei sich der Rücksprung (16) in Umfangsrichtung vollständig um den Grundkörper (10) herum erstreckt.

5. Verbundabdichtungs-Dübel (1) nach einem der Ansprüche 3 oder 4,
wobei eine Tiefe (16H) des Rücksprungs (16) im ersten Abschnitt (A1) in radialer Richtung des Grundkörpers (10) zwischen 0,25 mm und 2,5 mm beträgt; oder
wobei eine Tiefe (16H) des Rücksprungs (16) im ersten Abschnitt (A1) in radialer Richtung des Grundkörpers (10) zwischen 0,5 mm und 2,25 mm beträgt; oder
wobei eine Tiefe (16H) des Rücksprungs (16) im ersten Abschnitt (A1) in radialer Richtung des Grundkörpers (10) zwischen 1,0 mm und 2,0 mm beträgt.

6. Verbundabdichtungs-Dübel (1) nach einem der Ansprüche 1 bis 5,
wobei sich der Vorsprung (17) in axialer Richtung über den ganzen ersten Abschnitt (A1) erstreckt; oder
wobei sich der Vorsprung (17) in axialer Richtung des Grundkörpers (10) über zwischen 25 % und 95% des ersten Abschnitts (A1) erstreckt; oder
wobei sich der Vorsprung (17) in axialer Richtung des Grundkörpers (10) über zwischen 45 % und 90% des ersten Abschnitts (A1) erstreckt; oder
wobei sich der Vorsprung (17) in axialer Richtung des Grundkörpers (10) über zwischen 65 % und 85% des ersten Abschnitts (A1) erstreckt.

7. Verbundabdichtungs-Dübel (1) nach einem der Ansprüche 1 bis 6,
wobei sich der Vorsprung (17) in Umfangsrichtung vollständig innerhalb des Grundkörpers (10) herum erstreckt; oder
wobei mehrere voneinander getrennte Vorsprünge (17) in Umfangsrichtung verteilt vorgesehen sind.

8. Verbundabdichtungs-Dübel (1) nach einem der Ansprüche 1 bis 7,
wobei eine Höhe (17H) des Vorsprungs (17) in radialer Richtung des Grundkörpers (10) zwischen 0,25 mm und 2,5 mm beträgt; oder
wobei eine Höhe (17H) des Vorsprungs (17) in radialer Richtung des Grundkörpers (10) zwischen 0,5 mm und 2,25 mm beträgt; oder
wobei eine Höhe (17H) des Vorsprungs (17) in radialer Richtung des Grundkörpers (10) zwischen 1,0 mm und 2,0 mm beträgt.

9. Verbundabdichtungs-Dübel (1) nach einem der Ansprüche 1 bis 8, wobei der Dichtstoff (19) ein Elastomerkörper ist, der den Grundkörper (10) in Umfangsrichtung des Grundkörpers (10) vollständig umgibt, und so einen Ring bildet.

10. Verbundabdichtungs-Dübel (1) nach einem der Ansprüche 1 bis 9, wobei der Grundkörper (10) aus Kunststoff, insbesondere aus Polyamid, oder Metall gebildet ist.

11. Verbundabdichtungs-Dübel (1) nach einem der Ansprüche 1 bis 10,
wobei der Grundkörper (10) in einem Abschnitt wenigstens ein Paar von in axialer Richtung verlaufenden Schlitzen aufweist, welche eine Mantelfläche des Grundkörpers (10) durchdringen; und/oder
wobei der Grundkörper (10) in einem Abschnitt auf seiner radial außenliegenden Mantelfläche in Umfangsrichtung orientierte Rillen aufweist, welche sich in axialer Richtung mit in Umfangsrichtung orientierten Vorsprüngen abwechseln.

12. Verfahren zur Abdichtung einer Durchdringung (35) durch ein Verbundabdichtungssystem (30), aufweisend:
Bereitstellen eines Verbundabdichtungs-Dübels (1) nach einem der Ansprüche 1 bis 11, wobei ein Außendurchmesser (1D) des Verbundabdichtungs-Dübels (1) an einen Innendurchmesser der Durchdringung (35D) angepasst ist;
Einsetzen des Verbundabdichtungs-Dübels (1) in die Durchdringung (35); und
Bereitstellen einer Schraube (20), wobei ein Außendurchmesser (20D) der Schraube an einen Innendurchmesser (10D) des Grundkörpers (10) des Verbundabdichtungs-Dübels (1) angepasst ist; und
Einschrauben der Schraube (20) in den Grundkörper (10) des Verbundabdichtungs-Dübels (1).

13. Verwendung eines Verbundabdichtungs-Dübels (1) nach einem der Ansprüche 1 bis 11 zur Abdichtung einer Durchdringung (35) durch ein Verbundabdichtungssystem (30).

14. System zur Abdichtung einer Durchdringung (35) durch ein Verbundabdichtungssystem (30), aufweisend:
einen in die Durchdringung (35) eingesetzten Verbundabdichtungs-Dübel (1) nach einem der Ansprüche 1 bis 11; und
eine in den Verbundabdichtungs-Dübel (1) eingedrehte Schraube (20),
wobei der Verbundabdichtungs-Dübel (1) und die Schraube (20) gemeinsam ausgebildet sind, eine für eine jeweilige Beanspruchungsklasse des Verbundabdichtungssystems (30) geforderte Dichtigkeit auch im Bereich der Durchdringung (35) sicherzustellen.

15. Verfahren zur Abdichtung einer Durchdringung (35) durch ein Verbundabdichtungssystem (30), aufweisend:
Bereitstellen eines Verbundabdichtungs-Dübel (1") mit einem hohlzylindrischen Grundkörper (10"),
wobei der Grundkörper (10") in axialer Richtung an einem ersten Ende (11) eine Öffnung (13) zur Aufnahme einer Schraube (20) aufweist; wobei der Grundkörper (10") an seinen radial innenliegenden und radial außenliegenden Außenflächen jeweils Elastomer-Schichten (101, 103) aufweist, die jeweils in axialer Richtung und Umfangsrichtung des Verbundabdichtungs-Dübels durchgehend ausgebildet sind; und wobei der Grundkörper (10") radial innenliegend zu außenliegenden Elastomer-Schicht (101, 103) eine Schicht aus Polyamid oder Metall (102) aufweist;
wobei ein Außendurchmesser (1D) des Verbundabdichtungs-Dübels (1") an einen Innendurchmesser der Durchdringung (35D) angepasst ist;
Einsetzen des Verbundabdichtungs-Dübels (1") in die Durchdringung (35);
Bereitstellen einer Schraube (20), wobei ein Außendurchmesser (20D) der Schraube an einen Innendurchmesser (10D) des Grundkörpers (10") des Verbundabdichtungs-Dübels (1") angepasst ist; und
Einschrauben der Schraube (20) in den Grundkörper (10") des Verbundabdichtungs-Dübels (1").

16. Verfahren nach Anspruch 15, wobei beim Verbundabdichtungs-Dübel (1") die Dicke jeder Elastomer-Schicht (101, 103) in radialer Richtung zwischen 1 mm und 3 mm oder zwischen 1,5 mm und 2 mm beträgt; und/oder die Dicke der Schicht aus Polyamid oder Metall (102) in radialer Richtung zwischen 0,25 mm und 1,5 mm oder zwischen 0,4 mm und 0,8 mm beträgt.

17. Verwendung eines Verbundabdichtungs-Dübel (1") mit einem hohlzylindrischen Grundkörper (10'),
wobei der Grundkörper (10") in axialer Richtung an einem ersten Ende (11) eine Öffnung (13) zur Aufnahme einer Schraube (20) aufweist; wobei der Grundkörper (10") an seinen radial innenliegenden und radial außenliegenden Außenflächen jeweils Elastomer-Schichten (101, 103) aufweist, die jeweils in axialer Richtung und Umfangsrichtung des Verbundabdichtungs-Dübels durchgehend ausgebildet sind; und
wobei der Grundkörper (10") radial innenliegend zu außenliegenden Elastomer-Schicht (101, 103) eine Schicht aus Polyamid oder Metall (102) aufweist;
zur Abdichtung einer Durchdringung (35) durch ein Verbundabdichtungssystem (30).

## Claims

1. A wall plug (1) for composite waterproofing systems with a hollow cylindrical main body (10),
wherein the main body (10) has an opening (13) at a first end (11) in the axial direction for receiving a screw (20)
wherein the main body (10) has a first section (A1) and a second section (A2) in the axial direction, wherein the first section (A1) is arranged between the second section (A2) and the first end (11) of the main body (10),
wherein in the first section (A1), the main body (10) has a sealant (19) on its radially outer circumferential surface (14) and optionally on its radially inner circumferential surface and is free of the sealant (19) on its radially outer circumferential surface (14) in the second section (A2),
wherein the sealant (19) is formed from a material that is different from the material from which the main body (10) is formed, and
wherein the sealant (19) completely surrounds the main body (10) in the first section (A1) at the radially outer circumferential surface (14) of the main body (10) thus forming a ring, and
wherein the sealant (19) is formed of an elastic material and configured to provide sealing properties on both sides of a composite waterproofing system when a screw (20) is screwed into the wall plug (1),
**characterised in that**
the main body (19) has in the first section (A1) on its radially inner circumferential surface (15) a projection (17) extending in the radial and the axial direction.

2. The wall plug (1) for composite waterproofing systems according to claim 1,
wherein the first section (A1) of the main body (10) in which the main body (10) has sealant (19) extends in the axial direction of the main body (10) for between 10 mm and 15 mm; and/or
wherein the first section of the main body (10) in which the main body (10) has sealant (19) extends in the axial direction for over between 20% and 70% of the total length of the main body (10) or for over between 30% and 60% of the total length of the main body (10) or for over between 40% and 50% of the total length of the main body (10).

3. The wall plug (1) for composite waterproofing systems according to claim 1 or 2, wherein the material forming the main body (10) has in the first section (A1) on the radially outer circumferential surface (14) of the main body (10) a recess (16) extending in the axial and radial direction, into which the sealant (19) is fully or partially inserted;
wherein the recess (16) extends in the axial direction over the entire first section (A1) of the main body (10),
wherein the recess (16) extends in the axial direction for over between 20% and 90% of the first section (A1) of the main body (10); or
wherein the recess (16) extends in the axial direction for over between 40% and 85% of the first section (A1) of the main body (10); or
wherein the recess (16) extends in the axial direction for over between 60% and 80% of the first section (A1) of the main body (10).

4. The wall plug (1) for composite waterproofing systems according to claim 3,
wherein the recess (16) extends completely around the main body (10) in the circumferential direction.

5. The wall plug (1) for composite waterproofing systems according to claim 3 or 4,
wherein a depth (16H) of the recess (16) in the first section (A1) in the radial direction of the main body (10) is between 0.25 mm and 2.5 mm; or
wherein a depth (16H) of the recess (16) in the first section (A1) in the radial direction of the main body (10) is between 0.5 mm and 2.25 mm; or
wherein a depth (16H) of the recess (16) in the first section (A1) in the radial direction of the main body (10) is between 1.0 mm and 2.0 mm.

6. The wall plug (1) for composite waterproofing systems according to one of the claims 1 to 5,
wherein the protrusion (17) extends in the axial direction over the whole first section (A1); or
wherein the protrusion (17) extends in the axial direction of the main body (10) for over between 25% and 95% of the first section (A1); or
wherein the protrusion (17) extends in the axial direction of the main body (10) for over between 45% and 90% of the first section (A1); or
wherein the protrusion (17) extends in the axial direction of the main body (10) for over between 65% and 85% of the first section (A1).

7. The wall plug (1) for composite waterproofing systems according to one of the claims 1 to 6,
wherein the protrusion (17) extends circumferentially completely around inside the main body (10); or
wherein a plurality of projections (17) separated from each other are provided distributed in the circumferential direction.

8. The wall plug (1) for composite waterproofing systems according to one of the claims 1 to 7,
wherein a height (17H) of the projection (17) in the radial direction of the main body (10) is between 0.25 mm and 2.5 mm; or
wherein a height (17H) of the projection (17) in the radial direction of the main body (10) is between 0.5 mm and 2.25 mm; or
wherein a height (17H) of the projection (17) in the radial direction of the main body (10) is between 1.0 mm and 2.0 mm.

9. The wall plug (1) for composite waterproofing systems according to one of the claims 1 to 8, wherein the sealant (19) is an elastomeric body which completely surrounds the main body (10) at its radially outer circumferential surface of the main body (10), thus forming a ring.

10. The wall plug (1) for composite waterproofing systems according to one of the claims 1 to 9, wherein the main body (10) is made from plastic, in particular from polyamide, or metal.

11. The wall plug (1) for composite waterproofing systems according to one of the claims 1 to 10,
wherein the main body (10) has, in a section at least one pair of axially extending slits that penetrate a circumferential surface of the main body (10); and/or
wherein the main body (10) has, in a section circumferentially oriented grooves on its radially outer circumferential surface, which grooves alternate in the axial direction with circumferentially oriented projections.

12. A method of sealing a penetration (35) through a composite waterproofing system (30) comprising:
providing a wall plug (1) for composite waterproofing systems according to one of claims 1 to 11, wherein an outer diameter (1D) of the wall plug (1) for composite waterproofing systems is adjusted to an inner diameter of the penetration (35D);
inserting the wall plug (1) for composite waterproofing systems into the penetration (35);
providing a screw (20), wherein an outer diameter (20D) of the screw is adjusted to an inner diameter (10D) of the main body (10) of the wall plug (1) for composite waterproofing systems; and
screwing the screw (20) into the main body (10) of the wall plug (1) for composite waterproofing systems.

13. Use of a wall plug (1) for composite waterproofing systems according to one of claims 1 to 11 for sealing a penetration (35) through a composite waterproofing system (30).

14. A system for sealing a penetration (35) through a composite waterproofing system (30), comprising:
a wall plug (1) for composite waterproofing systems according to any one of claims 1 to 11 that is inserted into the penetration (35); and
a screw (20) screwed into the wall plug (1) for composite waterproofing systems,
wherein the wall plug (1) for composite waterproofing systems and the screw (20) in combination are designed to ensure a tightness required for a respective stress class of the composite waterproofing system (30) also in the area of the penetration (35).

15. A method of sealing a penetration (35) through a composite waterproofing system (30) comprising:
providing a wall plug (1") with a hollow cylindrical main body (10),
wherein the main body (10") has an opening (13) at a first end (11) in the axial direction for receiving a screw (20);
wherein the main body (10") has elastomer layers (101, 103) on its radially inner and radially outer exterior surfaces, which are each formed continuously in the axial direction and circumferential direction of the wall plug for composite waterproofing systems, and
wherein the main body (10") has a layer of polyamide or metal (102) radially internal the outer elastomer layer (101, 103);
wherein an outer diameter (1D) of the wall plug (1") for composite waterproofing systems is adjusted to an inner diameter of the penetration (35D);
inserting the wall plug (1") for composite waterproofing systems into the penetration (35);
providing a screw (20), wherein an outer diameter (20D) of the screw is adjusted to an inner diameter (10D) of the main body (10)" of the wall plug (1") for composite waterproofing systems; and
screwing the screw (20) into the main body (10") of the wall plug (1") for composite waterproofing systems.

16. The method of claim 15, wherein in the wall plug (1") for composite waterproofing systems the thickness of each elastomer layer (101, 103) is between 1 mm and 3 mm or between 1.5 mm and 2 mm in the radial direction; and/or the thickness of the layer of polyamide or metal (102) is between 0.25 mm and 1.5 mm or between 0.4 mm and 0.8 mm in the radial direction.

17. Use of a wall plug (1") for composite waterproofing systems with a hollow cylindrical main body (10),
wherein the main body (10") has an opening (13) at a first end (11) in the axial direction for receiving a screw (20);
wherein the main body (10") has elastomer layers (101, 103) on its radially inner and radially outer exterior surfaces, which are each formed continuously in the axial direction and circumferential direction of the wall plug for composite waterproofing systems, and
wherein the main body (10") has a layer of polyamide or metal (102) radially internal the outer elastomer layer (101, 103);
for sealing a penetration (35) through a composite waterproofing system (30).

## Revendications

1. Cheville d'étanchéité composite (1) comportant un corps de base (10) cylindrique creux,
dans laquelle le corps de base (10) présente dans la direction axiale, à une première extrémité (11), une ouverture (13) destinée à recevoir une vis (20),
dans laquelle le corps de base (10) présente dans la direction axiale une première section (A1) et une seconde section (A2), dans laquelle la première section (A1) est disposée entre la seconde section (A2) et la première extrémité (11) du corps de base (10),
dans laquelle le corps de base (10) présente sur sa surface d'enveloppe (14) située radialement à l'extérieur et, éventuellement, sur sa surface d'enveloppe située radialement à l'intérieur dans la première section (A1), un matériau d'étanchéité (19) et est exempt du matériau d'étanchéité (19) sur sa surface d'enveloppe (14) située radialement à l'extérieur dans la seconde section (A2),
dans laquelle le matériau d'étanchéité (19) est formé d'un matériau qui est différent du matériau duquel le corps de base (10) est formé, et
dans laquelle le matériau d'étanchéité (19) entoure complètement le corps de base (10) dans la première section (A1) sur sa surface d'enveloppe (14) située radialement à l'extérieur dans la direction circonférentielle du corps de base (10), et forme ainsi un anneau, et
dans laquelle le matériau d'étanchéité (19) est formé d'un matériau élastique et est conçu pour fournir une étanchéité des deux côtés d'une étanchéité composite lors du vissage d'une vis (20) dans la cheville d'étanchéité composite (1) ;
**caractérisée en ce que**
le corps de base (10) présente dans la première section (A1), sur sa surface d'enveloppe (15) située radialement à l'intérieur, une saillie (17) s'étendant dans les directions radiale et axiale.

2. Cheville d'étanchéité composite (1) selon la revendication 1,
dans laquelle la première section (A1) du corps de base (10), dans laquelle le corps de base (10) présente un matériau d'étanchéité (19), s'étend dans la direction axiale du corps de base (10) sur entre 10 mm et 15 mm ; et/ou
dans laquelle la première section du corps de base (10), dans laquelle le corps de base (10) présente un matériau d'étanchéité (19), s'étend dans la direction axiale sur entre 20 % et 70 % de la longueur totale du corps de base (10) ou sur entre 30 % et 60 % de la longueur totale du corps de base (10) ou sur entre 40 % et 50 % de la longueur totale du corps de base (10).

3. Cheville d'étanchéité composite (1) selon la revendication 1 ou 2,
dans laquelle le matériau formant le corps de base (10) présente dans la première section (A1), sur la surface d'enveloppe (14) située radialement à l'extérieur du corps de base (10), un renfoncement (16) s'étendant dans les directions axiale et radiale, dans lequel renfoncement le matériau d'étanchéité (19) est inséré entièrement ou partiellement ;
dans laquelle le renfoncement (16) s'étend dans la direction axiale sur toute la première section (A1) du corps de base (10) ; ou
dans laquelle le renfoncement (16) s'étend dans la direction axiale sur entre 20 % et 90 % de la première section (A1) du corps de base ; ou
dans laquelle le renfoncement (16) s'étend dans la direction axiale sur entre 40 % et 85 % de la première section (A1) du corps de base (10) ; ou
dans laquelle le renfoncement (16) s'étend dans la direction axiale sur entre 60 % et 80 % de la première section (A1) du corps de base (10).

4. Cheville d'étanchéité composite (1) selon la revendication 3, dans laquelle le renfoncement (16) s'étend entièrement autour du corps de base (10) dans la direction circonférentielle.

5. Cheville d'étanchéité composite (1) selon l'une des revendications 3 ou 4,
dans laquelle une profondeur (16H) du renfoncement (16) dans la première section (A1) dans la direction radiale du corps de base (10) est comprise entre 0,25 mm et 2,5 mm ; ou
dans laquelle une profondeur (16H) du renfoncement (16) dans la première section (A1) dans la direction radiale du corps de base (10) est comprise entre 0,5 mm et 2,25 mm ; ou
dans laquelle une profondeur (16H) du renfoncement (16) dans la première section (A1) dans la direction radiale du corps de base (10) est comprise entre 1,0 mm et 2,0 mm.

6. Cheville d'étanchéité composite (1) selon l'une des revendications 1 à 5,
dans laquelle la saillie (17) s'étend dans la direction axiale sur toute la première section (A1) ; ou
dans laquelle la saillie (17) s'étend dans la direction axiale du corps de base (10) sur entre 25 % et 95 % de la première section (A1) ; ou
dans laquelle la saillie (17) s'étend dans la direction axiale du corps de base (10) sur entre 45 % et 90 % de la première section (A1) ; ou
dans laquelle la saillie (17) s'étend dans la direction axiale du corps de base (10) sur entre 65 % et 85 % de la première section (A1).

7. Cheville d'étanchéité composite (1) selon l'une des revendications 1 à 6,
dans laquelle la saillie (17) s'étend dans la direction circonférentielle entièrement à l'intérieur du corps de base (10) ; ou
dans laquelle plusieurs saillies (17) séparées les unes des autres sont prévues de manière à être réparties dans la direction circonférentielle.

8. Cheville d'étanchéité composite (1) selon l'une des revendications 1 à 7,
dans laquelle une hauteur (17H) de la saillie (17) dans la direction radiale du corps de base (10) est comprise entre 0,25 mm et 2,5 mm ; ou
dans laquelle une hauteur (17H) de la saillie (17) dans la direction radiale du corps de base (10) est comprise entre 0,5 mm et 2,25 mm ; ou
dans laquelle une hauteur (17H) de la saillie (17) dans la direction radiale du corps de base (10) est comprise entre 1,0 mm et 2,0 mm.

9. Cheville d'étanchéité composite (1) selon l'une des revendications 1 à 8, dans laquelle le matériau d'étanchéité (19) est un corps élastomère qui entoure complètement le corps de base (10) dans la direction circonférentielle du corps de base (10), et forme ainsi un anneau.

10. Cheville d'étanchéité composite (1) selon l'une des revendications 1 à 9, dans laquelle le corps de base (10) est formé à partir de matière plastique, en particulier de polyamide, ou de métal.

11. Cheville d'étanchéité composite (1) selon l'une des revendications 1 à 10,
dans laquelle le corps de base (10) présente dans une section au moins une paire de fentes s'étendant dans la direction axiale, lesquelles fentes traversent une surface d'enveloppe du corps de base (10) ; et/ou
dans laquelle le corps de base (10) présente dans une section, sur sa surface d'enveloppe située radialement à l'extérieur, des rainures orientées dans la direction circonférentielle qui alternent dans la direction axiale avec des saillies orientées dans la direction circonférentielle.

12. Procédé permettant d'assurer l'étanchéité d'une percée (35) au moyen d'un système d'étanchéité composite (30), présentant :
la fourniture d'une cheville d'étanchéité composite (1) selon l'une des revendications 1 à 11, dans lequel un diamètre extérieur (1D) de la cheville d'étanchéité composite (1) est adapté à un diamètre intérieur de la percée (35D) ;
l'insertion de la cheville d'étanchéité composite (1) dans la percée (35) ; et
la fourniture d'une vis (20), dans lequel un diamètre extérieur (20D) de la vis est adapté à un diamètre intérieur (10D) du corps de base (10) de la cheville d'étanchéité composite (1) ; et
le vissage de la vis (20) dans le corps de base (10) de la cheville d'étanchéité composite (1).

13. Utilisation d'une cheville d'étanchéité composite (1) selon l'une des revendications 1 à 11 pour assurer l'étanchéité d'une percée (35) au moyen d'un système d'étanchéité composite (30).

14. Système permettant d'assurer l'étanchéité d'une percée (35) au moyen d'un système d'étanchéité composite (30), présentant :
une cheville d'étanchéité composite (1) selon l'une des revendications 1 à 11 insérée dans la percée (35) ; et
une vis (20) vissée dans la cheville d'étanchéité composite (1),
dans lequel la cheville d'étanchéité composite (1) et la vis (20) sont conçues conjointement pour assurer, également dans la zone de la percée (35), une étanchéité requise pour une classe de sollicitation respective du système d'étanchéité composite (30).

15. Procédé permettant d'assurer l'étanchéité d'une percée (35) au moyen d'un système d'étanchéité composite (30), présentant :
la fourniture d'une cheville d'étanchéité composite (1") comportant un corps de base (10") cylindrique creux,
dans lequel le corps de base (10") présente dans la direction axiale, à une première extrémité (11), une ouverture (13) destinée à recevoir une vis (20) ;
dans lequel le corps de base (10") présente sur ses surfaces extérieures radialement intérieure et radialement extérieure respectivement des couches d'élastomère (101, 103) qui sont conçues de manière continue respectivement dans la direction axiale et dans la direction circonférentielle de la cheville d'étanchéité composite ; et
dans lequel le corps de base (10") présente, radialement à l'intérieur par rapport à la couche d'élastomère (101, 103) située à l'extérieur, une couche de polyamide ou de métal (102) ;
dans lequel un diamètre extérieur (1D) de la cheville d'étanchéité composite (1") est adapté à un diamètre intérieur de la percée (35D) ;
l'insertion de la cheville d'étanchéité composite (1") dans la percée (35) ; la fourniture d'une vis (20), dans lequel un diamètre extérieur (20D) de la vis est adapté à un diamètre intérieur (10D) du corps de base (10") de la cheville d'étanchéité composite (1") ; et
le vissage de la vis (20) dans le corps de base (10") de la cheville d'étanchéité composite (1").

16. Procédé selon la revendication 15, dans lequel, pour la cheville d'étanchéité composite (1"), l'épaisseur de chaque couche d'élastomère (101, 103) dans la direction radiale est comprise entre 1 mm et 3 mm ou entre 1,5 mm et 2 mm ; et/ou
l'épaisseur de la couche de polyamide ou de métal (102) dans la direction radiale est comprise entre 0,25 mm et 1,5 mm ou entre 0,4 mm et 0,8 mm.

17. Utilisation d'une cheville d'étanchéité composite (1") comportant un corps de base (10") cylindrique creux,
dans laquelle le corps de base (10") présente dans la direction axiale, à une première extrémité (11), une ouverture (13) destinée à recevoir une vis (20) ;
dans laquelle le corps de base (10") présente sur ses surfaces extérieures radialement intérieure et radialement extérieure respectivement des couches d'élastomère (101, 103) qui sont conçues de manière continue respectivement dans la direction axiale et dans la direction circonférentielle de la cheville d'étanchéité composite ; et
dans laquelle le corps de base (10") présente, radialement à l'intérieur par rapport à la couche d'élastomère (101, 103) située à l'extérieur, une couche de polyamide ou de métal (102) ;
pour assurer l'étanchéité d'une percée (35) au moyen d'un système d'étanchéité composite (30).
